# EUROPÄISCHE PATENTSCHRIFT

(11) **EP 1 745 982 B1**
(45) Veröffentlichungstag und Bekanntmachung des Hinweises auf die Patenterteilung: **15.02.2012**
(21) Anmeldenummer: 06013430.1
(22) Anmeldetag: 29.06.2006
(51) Int. Cl.: B60R 5/04

(54) **Laderaumschutzvorrichtung mit wenigstens einer Wickelwelle**
Protection device for a luggage compartment with at least one winding shaft
Dispositif de protection pour un coffre avec au moins un arbre de bobinage

(30) Priorität: 11.07.2005 DE 102005033819
(43) Veröffentlichungstag der Anmeldung: 24.01.2007
(73) Patentinhaber: BOS GmbH & Co. KG, 73760 Ostfildern (DE)
(72) Erfinder: Schlecht, Werner P., 71665 Vaihingen/Enz (DE)
(74) Vertreter: Patentanwälte Ruff, Wilhelm, Beier, Dauster & Partner

(56) Entgegenhaltungen:
- EP-A2- 1 447 275
- DE-A1- 19 707 674
- DE-C1- 10 144 150
- DE-U1- 29 900 690
- US-A- 5 676 415

## Beschreibung

Die Erfindung betrifft eine Laderaumschutzvorrichtung mit wenigstens einer Wickelwelle, die zwischen zwei Endkappen drehbeweglich gelagert ist, wobei die Endkappen Fixiermittel zum Befestigen der Einheit aus Wickelwelle und Endkappen in fahrzeugseitigen Halteaufnahmen aufweisen und wobei die Wickelwelle in einem Bereich zwischen den Endkappen von einem Gehäuse umgeben ist, das wenigstens einen Austrittsschlitz für ein auf der Wickelwelle auf- und abwickelbar gehaltenes flexibles Flächengebilde umfasst.

Derartige Laderaumschutzvorrichtungen sind allgemein bekannt, siehe DE 101 441 50C, und dienen zum Abtrennen des Laderaumes von einem Fahrgastraum und/oder als Laderaumabdeckung, die den Laderaum etwa auf Brüstungshöhe des Fahrzeugs etwa horizontal überdecken kann. Derartige Laderaumschutzvorrichtungen weisen ein Kassettengehäuse auf, in dem je nach Ausführung eine oder mehrere Wickelwellen drehbar gelagert sind, auf denen jeweils ein flexibles Flächengebilde auf- und abwickelbar gehalten ist. Bei der Ausführung der Laderaumschutzvorrichtung als vertikal aufspannbare Rückhaltevorrichtung, um im Falle einer starken Fahrzeugverzögerung durch eine Vollbremsung oder durch einen Fahrzeugaufprall zu verhindern, dass Ladegut aus dem Laderaum in den Fahrgastraum nach vorne geschleudert wird, weist das Kassettengehäuse eine nach oben offene, schlitzförmige Austrittsöffnung auf, durch die ein flexibles Flächengebilde in Form eines Trennnetzes nach oben zum Dachhimmel hin ausziehbar ist. Bei der Ausführung als horizontal aufspannbare Laderaumabdeckung ist das Kassettengehäuse mit einem nach hinten offenen Austrittsschlitz versehen, durch den ein planenartiges flexibles Flächengebilde etwa horizontal nach hinten ausziehbar ist und im Heckbereich mit ihrem Stirnende fahrzeugseitig fixierbar ist. Schließlich ist noch eine Ausführungsform einer Laderaumschutzvorrichtung bekannt, bei der eine vertikal aufspannbare Rückhaltevorrichtung und eine horizontal ausziehbare Laderaumabdeckung in einem gemeinsamen Kassettengehäuse integriert sind. Für diesen Fall weist das Kassettengehäuse Aufnahmeräume für zwei Wickelwellen auf und ist sowohl nach oben als auch nach hinten mit jeweils einem Austrittsschlitz versehen. Bei allen Ausführungsformen ist das Kassettengehäuse auf gegenüberliegenden Stirnseiten mit zwei Endkappen versehen, die auch als Gehäuseseitenteile bezeichnet werden. Diese dienen dazu, zum Einen das Kassettengehäuse zu den Stirnseiten hin abzuschließen und zum Anderen Befestigungsmittel vorzusehen, um eine fahrzeugseitige Montage und Demontage des Kassettengehäuses in fahrzeugfesten Halteaufnahmen, vorzugsweise in dem Brüstungsbereich des Fahrzeuginnenraumes, zu ermöglichen. Diese Endkappen übergreifen das Kassettengehäuse axial und sind durch Nietverbindungen an dem Kassettengehäuse befestigt. Es ist auch bekannt, eine der beiden Endkappen axial beweglich an dem Kassettengehäuse zu lagern. Diese Ausführung wird eingesetzt, wenn das Kassettengehäuse axial in den entsprechenden fahrzeugseitigen Halteaufnahmen gesichert wird. Dazu wird die bewegliche Endkappe koaxial zur Gehäuselängsachse durch Federkraft nach außen gedrückt, wodurch entsprechende Befestigungsmittel der Endkappen in korrespondierende Aussparungen der fahrzeugseitigen Halteaufnahmen formschlüssig eintauchen. Eine Entnahme des Kassettengehäuses wird in einfacher Weise durch ein axiales Aufschieben der Endkappe auf das Gehäuse erzielt, wodurch sich die Gesamtlänge der Schutzvorrichtung verringert und so das Kassettengehäuse aus den fahrzeugseitigen Halteaufnahmen freikommt. Die bekannten Kassettengehäuse weisen über ihre gesamte Länge den gleichen Querschnitt auf und sind vorzugsweise aus Strangpressprofilen hergestellt.

Aufgabe der Erfindung ist es, eine Laderaumschutzvorrichtung der eingangs genannten Art zu schaffen, die eine verbesserte Anpassung an die Fahrzeuginnenraumgestaltung ermöglicht.

Diese Aufgabe wird dadurch gelöst, dass die Endkappen in ihrem an das Gehäuse anschließenden Stirnrandbereich derart gestaltet sind, dass ihre Außenkontur fluchtend in die Außenkontur des Gehäuses übergeht, und dass Steckmittel an den Stirnrandbereichen der Endkappen und/oder an korrespondierenden Stirnseiten des Gehäuses vorgesehen sind, die ein zentriertes Anfügen der Endkappen an das Gehäuse ermöglichen. Dadurch ist es möglich, die Endkappen bündig und fluchtend an das Gehäuse anzufügen, so dass für die Laderaumschutzvorrichtung sich über deren gesamte Außenkontur ein einheitliches Bild ergibt. Die Endkappen sind somit optisch in das Gesamtbild der Laderaumschutzvorrichtung integriert. Dadurch ist es möglich, das Kassettengehäuse einschließlich seiner Endkappen an entsprechende Designanforderungen für die Fahrzeuginnenraumgestaltung anzupassen. Die Steckmittel gewährleisten gleichzeitig eine sichere Zentrierung und Positionierung der Endkappen am Gehäuse.

Erfindungsgemäß ist wenigstens eine Endkappe durch Führungsflächen relativ zu einer Gehäuselängsachse axial beweglich geführt, und es ist wenigstens ein Endanschlag vorgesehen, der die Axialbeweglichkeit der Endkappe relativ zu dem Gehäuse begrenzt.

In Ausgestaltung der Erfindung umfassen die Steckmittel Aufnahmeränder am Gehäuse, die nach innen abgesetzt sind, und jede Endkappe weist korrespondierende Steckflächen auf, die außen auf den jeweiligen Aufnahmerand aufsteckbar sind. Dadurch ist es vorteilhaft möglich, die Endkappe bündig und fluchtend auf die entsprechende Stirnseite des Gehäuses aufzustecken und eine sichere Positionierung der Endkappe zu schaffen.

Gemäß einer vorteilhaften Ausgestaltung der Erfindung sind den Steckmitteln Sicherungsmittel zugeordnet, die jede Endkappe in ihrem an das Gehäuse angefügten Montagezustand axial sichern. Dadurch können vorteilhaft zusätzliche Befestigungsmittel vermieden werden. Die Sicherungsmittel können insbesondere in Form von Rastnasen und Rastaussparungen einstückig am Gehäuse bzw. an der entsprechenden Endkappe angeformt sein.

In weiterer Ausgestaltung der Erfindung weisen die Aufnahmeränder eine gehäuseinnenseitige Abstufung auf und jede Endkappe ist in die Abstufung axial eingesteckt. Bei dieser Ausführungsform wird die jeweilige Endkappe mit ihren Steckflächen axial in das Gehäuse eingeschoben. Auch bei dieser Ausführungsform ist selbstverständlich der bündige und mit der Außenkontur fluchtende Anschluss der Endkappe gewährleistet.

Der Endanschlag kann auch als Sicherungsmittel im Sinne der Erfindung dienen. Diese Ausführungsform ist vorteilhaft einsetzbar bei Laderaumschutzvorrichtungen, bei denen das Gehäuse durch axial federbelastete Bewegung wenigstens einer Endkappe montiert und demontiert wird. Vorteilhaft ist ein entsprechender Endanschlag einstückig an der Endkappe angeformt. Hierzu ist die wenigstens eine Endkappe aus Kunststoff hergestellt.

In weiterer Ausgestaltung der Erfindung sind die Endkappen und die Wickelwelle lastaufnehmend ausgeführt. Bei dieser Ausführungsform bilden die beiden Endkappen und die Wickelwelle zusammen mit der Lagerung der Wickelwelle in den Endkappen die Tragstruktur für die Laderaumschutzvorrichtung. Das Gehäuse selbst muss keine Trag- oder Stützfunktion übernehmen und kann demzufolge ausschließlich nach optischen und designerischen Kriterien gestaltet sein.

In weiterer Ausgestaltung der Erfindung ist die Wickelwelle derart formstabil ausgeführt, dass sie als Querträger zur Kraftaufnahme von Seitenaufprallbelastungen in Fahrzeugquerrichtung dient. Zusätzlich zu der Wickelwelle ist in vorteilhafter Weise auch die Befestigung der Endkappen im Laderaum, vorzugsweise in Seitenbrüstungen des Fahrzeuginnenraumes, derart stabil ausgeführt, dass sich bei einer Seitenaufprallbelastung im Bereich einer Endkappe ein Kraftfluss von dieser Endkappe durch die Wickelwelle hindurch zur gegenüberliegenden Endkappe und dort in die gegenüberliegenden Teile der Karosserietragstruktur ergibt. Vorteilhaft ist die Wickelwelle bei einer derartigen Ausführungsform lediglich mit äußerst geringem axialem Spiel in den Halteaufnahmen der seitlichen Brüstung angeordnet, so dass sich der entsprechende Kraftfluss ausbilden kann. In weiterer Ausgestaltung ist es möglich, die Wickelwelle aus einem zumindest abschnittsweise plastisch deformierbaren Material zu gestalten, um bei einem entsprechenden Seitenaufprall eine zusätzliche Energieabsorption durch Verformung der Wickelwelle zu ermöglichen.

In weiterer Ausgestaltung der Erfindung ist das Gehäuse aus Kunststoff ein- oder mehrteilig hergestellt. Vorzugsweise besteht das Gehäuse aus einer Oberschale und einer Unterschale, wodurch in besonders vorteilhafter Weise das Gehäuse in seiner Außenkontur durch Freiformflächen gestaltet werden kann. Die mehrschalige Bauweise des Gehäuses ermöglicht die Gestaltung des Gehäuses überwiegend nach designerischen Kriterien, ohne dass eine Serienproduktion des Gehäuses im Kunststoffspritzgussverfahren in Frage gestellt wäre.

Weitere Vorteile und Merkmale der Erfindung ergeben sich aus den Ansprüchen sowie aus der nachfolgenden Beschreibung bevorzugter Ausführungsbeispiele der Erfindung, die anhand der Zeichnungen dargestellt sind.
- Fig. 1: zeigt in perspektivischer Darstellung eine erste Ausführungsform einer erfindungsgemäßen Laderaumschutzvorrichtung in Form einer Laderaumabdeckung,
- Fig. 2: einen Ausschnitt der Laderaumabdeckung nach Fig. 1 längs der Schnittebene II-II in Fig. 1,
- Fig. 3: in vergrößerter, schematischer Darstellung einen Ausschnitt einer weiteren erfindungsgemäßen Laderaumschutzvorrichtung im Bereich der Montage an einer fahrzeugseitigen Seitenbrüstung,
- Fig. 4: die Laderaumschutzvorrichtung nach Fig. 3 in perspektivischer, teilweise aufgebrochener Darstellung,
- Fig. 5: eine Explosionsdarstellung der Laderaumschutzvorrichtung nach Fig. 4, und
- Fig. 6: in perspektivischer Darstellung einen Ausschnitt eines Fahrzeuginnenraumes, der mit einer weiteren Ausführungsform einer
erfindungsgemäßen Laderaumschutzvorrichtung versehen ist.

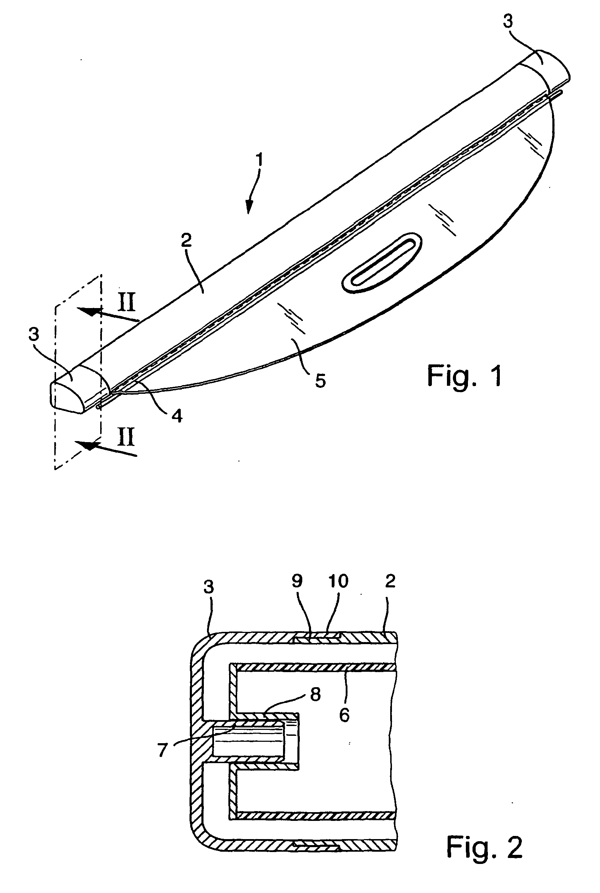

Eine Laderaumschutzvorrichtung in Form einer horizontal ausziehbaren Laderaumabdeckung 1 weist gemäß den Figuren 1 und 2 ein Gehäuse in Form eines Kassettengehäuses 2 auf, das sich in montiertem Zustand innerhalb eines Laderaumes eines Kombi-Personenkraftwagens in Fahrzeugquerrichtung erstreckt. Ein derartiges Kassettengehäuse 2 ist in grundsätzlich bekannter Weise etwa auf Höhe einer Fahrzeugbordkante unmittelbar hinter einer Fondsitzbank eines Fahrgastraumes des Fahrzeuginnenraumes angeordnet. In dem Kassettengehäuse 2 ist eine Wickelwelle drehbar gelagert, auf der ein flexibles Flächengebilde, vorzugsweise in Form einer Abdeckplane, auf- und abwickelbar gehalten ist. Das Kassettengehäuse 2 weist einen sich über nahezu die gesamte Länge des Kassettengehäuses 2 erstreckenden Auszugschlitz auf, durch den das flexible Flächengebilde zu einem Heck des Kraftfahrzeugs hin und damit zum Laderaum hin etwa horizontal nach hinten ausgezogen werden kann. Zum Ausziehen des Flächengebildes ist in grundsätzlich bekannter Weise an seinem in Auszugrichtung vorderen Stirnende eine Ausziehleiste 4 vorgesehen, die sich über die gesamte Breite des Flächengebildes erstreckt und an der ein formstabiles Konturteil 5 angeformt ist. Das formstabile Konturteil 5 ist mit einer Durchgriffsöffnung versehen, die in grundsätzlich bekannter Weise einen Schließdeckel aufweisen kann.

An den gegenüberliegenden Stirnseiten des Kassettengehäuses 2 ist als Gehäuseseitenteil jeweils eine Endkappe 3 vorgesehen, die bündig und mit ihrer Außenkontur fluchtend an die Außenkontur des Kassettengehäuses 2 angefügt sind. Die Endkappen 3 sind in nicht näher dargestellter Weise mit Befestigungsmitteln versehen, um eine fahrzeugseitige Fixierung des Kassettengehäuses 2 einschließlich der Endkappen 3 in den seitlichen Brüstungen des Laderaumes vornehmen zu können. Bei einem nicht dargestellten Ausführungsbeispiel können die Befestigungsmittel auch direkt am Kassettengehäuse angeordnet sein. Bei einer derartigen Ausführungsform erfolgt die Befestigung der Laderaumabdeckung 1 vorzugsweise an der Rückseite der Fondsitzbank. Bei einer derartigen Ausführungsform haben die Endkappen keine Befestigungsfunktion für das Kassettengehäuse.

In jedem Fall, so auch bei der Ausführungsform nach den Figuren 1 und 2 sind die Endkappen 3 dazu da, eine sich im Inneren des Kassettengehäuses 2 erstreckende Wickelwelle 6 im Bereich ihrer gegenüberliegenden Stirnenden drehbar zu lagern. Auf der Wickelwelle 6 ist das flexible Flächengebilde gehalten und auf- und abwickelbar gelagert. In nicht näher dargestellter Weise ist innerhalb der Wickelwelle 6 eine Aufwickelfeder vorgesehen, die auf die Wickelwelle 6 ein Drehmoment in Aufwickelrichtung ausübt, um ein automatisches Aufwickeln des Flächengebildes auf die Wickelwelle 6 zu ermöglichen, sobald eine entsprechend entgegenwirkende Zugbelastung auf die Auszugleiste 4 und das Konturteil 5 des Flächengebildes weggenommen ist.

Zur drehbaren Lagerung der Wickelwelle 6 ist innenseitig an einer Stirnfläche der Endkappe 3 ein Lagerzapfen 7 einstückig angeformt, der koaxial zur Wickelwelle 6 nach innen ragt. Der Wickelwelle 6 selbst ist stirnseitig eine korrespondierende Lagerhülse 8 zugeordnet, die gleitgelagert auf den Lagerzapfen 7 aufgesetzt ist.

Um die bündig und fluchtend mit der Außenkontur des Kassettengehäuses 2 abschließende Endkappe 3 an das Kassettengehäuse 2 anfügen zu können, ist die entsprechende Stirnseite des Kassettengehäuses 2 mit einem umlaufenden Aufnahmerand 9 versehen, der gegenüber der sichtbaren Außenkontur des Kassettengehäuses 2 stufenartig nach innen abgesetzt ist, und bei der Ausführungsform gemäß Fig. 2 etwa die halbe Wandungsstärke der Wandung des Kassettengehäuses 2 aufweist. Die Endkappe 3, deren Wandstärke der des Kassettengehäuses 2 entspricht, ist in ihrem dem Aufnahmerand 9 des Kassettengehäuses 2 zugewandten Stirnflächenbereich mit einem korrespondierenden Steckrand 10 versehen, der als fluchtender Fortsatz der Wandung der Endkappe 3 gestaltet ist, jedoch lediglich etwa die Hälfte der Wandungsstärke der Wandung der Endkappe 3 aufweist. Der Steckrand 10 ist auf den Aufnahmerand 9 des Kassettengehäuses 20 abgestimmt, um ein kraftschlüssiges Aufstecken der Endkappe 3 auf den Aufnahmerand 9 des Kassettengehäuses 2 zu ermöglichen. Ergänzend kann in nicht näher dargestellter Weise ein Sicherungsmittel vorgesehen sein, um die Endkappe 3 in ihrer aufgesteckten Position am Kassettengehäuse 2 zu sichern.

Die Endkappe 3 entspricht in ihrem Querschnitt und in ihrer Außenkontur dem Querschnitt und der Außenkontur des Kassettengehäuses 2, so dass die Endkappen 3 die stirnseitigen Fortsätze des Kassettengehäuses 2 darstellen, ohne dass diese radial über die Außenkontur des Kassettengehäuses 2 hinausragen.

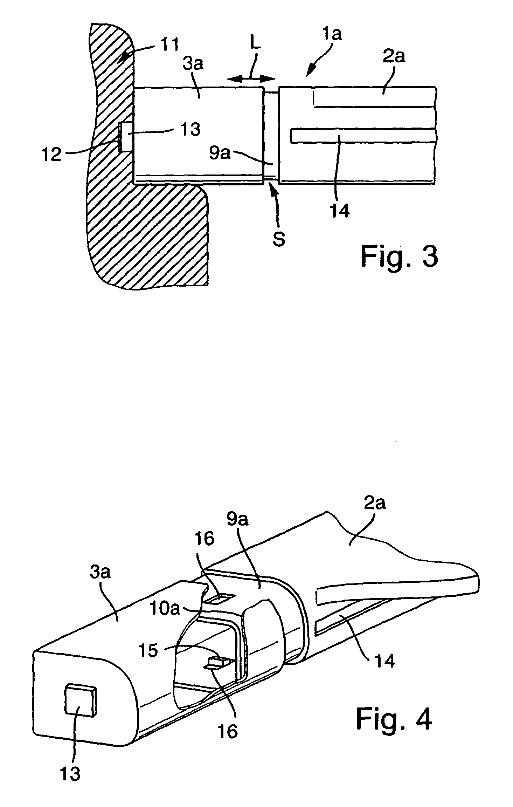

Bei der Ausführungsform nach den Figuren 3 bis 5 ist eine Laderaumschutzvorrichtung 1 a, vorzugsweise in Form einer Laderaumabdeckung, vorgesehen, bei der an ein Kassettengehäuse 2a eine Endkappe 3a so angefügt ist, dass sie im Verbindungsbereich mit ihrer Außenkontur fluchtend an das Kassettengehäuse 2a bzw. an dessen Außenkontur anschließt. Wesentlicher Unterschied zur Ausführungsform nach den Figuren 1 und 2 ist es, dass bei der Ausführungsform nach den Figuren 3 bis 5 eine der beiden Endkappen 3a, nämlich die in den Figuren 3 bis 5 dargestellte Endkappe 3a, zusätzlich begrenzt axial beweglich gelagert ist (Doppelpfeil L). Diese axiale Beweglichkeit dient dazu, das Kassettengehäuse 2a einschließlich seiner beiden Endkappen 3a in fahrzeugseitigen Halteaufnahmen 11 der Brüstung des Laderaumes zu montieren und zu demontieren. Um die Endkappe 3a koaxial zur Längsachse des Kassettengehäuses 2a und damit koaxial zur Längsachse der Wickelwelle in Pfeilrichtung L begrenzt axial beweglich führen zu können, ist der umlaufende Aufnahmerand 9a des Kassettengehäuses 2a verlängert, so dass er zusätzlich zu seiner Steck- und Zentrierfunktion eine axiale Führungsfunktion für die Endkappe 3a übernimmt. In entsprechend umgekehrter Weise ist die Endkappe 3a wenigstens über einen Großteil ihrer axialen Länge mit reduzierter Wandungsstärke versehen, um das bündige und fluchtende Aufstecken der Endkappe 3a auf den Aufnahmerand 9a zu ermöglichen. Die entsprechenden Steck- und Führungsflächen innenseitig der Endkappen 3a sind mit dem Bezugszeichen 10a versehen.

Um ergänzend die Axialbeweglichkeit der Endkappe 3a auf dem Aufnahmerand 9a des Kassettengehäuses 2a zu begrenzen und gleichzeitig die Endkappe 3a am Kassettengehäuse 2a zu sichern, sind innenseitig der Endkappe 3a sowohl im Bereich ihrer Oberseite als auch im Bereich ihrer Unterseite Rastnasen 15 vorgesehen, die in korrespondierende, schlitzförmige Führungsaussparungen 16 des Aufnahmerandes 9a eingreifen. Die Führungsaussparungen 16 erstrecken sich achsparal-lel zu der Längsachse des Kassettengehäuses 2a und weisen eine so große Länge auf, dass die jeweilige Rastnase 15 in der entsprechenden Führungsaussparung 16 um einen bestimmten Betrag axial verschiebbar angeordnet ist.

An einem äußeren Stirnende der Endkappe 3a ist die Endkappe 3a mit einem Fixierzapfen 13 versehen, der in montiertem Zustand in eine korrespondierende Fixieraussparung 12 der fahrzeugseitigen Halteaufnahme 11 eingreift. Der Betrag der axialen Länge, um den die Endkappe 3a axialbeweglich gelagert ist (Doppelpfeil L), entspricht wenigstens der Tiefe der Fixieraussparung 12, um eine Montage und Demontage des Kassettengehäuses 2a einschließlich der Endkappen 3a zu ermöglichen. In nicht näher dargestellter Weise wirkt auf die Endkappe 3a eine vorzugsweise durch eine Feder aufgebrachte axiale Druckkraft nach außen, die die Endkappe 3a in unbelastetem Zustand in der axial äußeren Endlage (Fig. 3) hält. Durch manuelles Drücken der Endkappe 3a zur Mitte des Kassettengehäuses hin kann das Kassettengehäuse 2a einschließlich der Endkappen 3a aus den fahrzeugseitigen Halteaufnahmen 11 entnommen werden.

In dem Kassettengehäuse 2a ist ein Längsschlitz 14 vorgesehen, der als Austrittsöffnung für das flexible Flächengebilde dient.

Die in Fig. 3 erkennbare Fuge S entspricht in ihrer Breite dem axialen Weg, den die Endkappe 3a aus der Stellung gemäß Fig. 3 axial zum Kassettengehäuse 2a hin maximal ausüben kann.

Die Rastnasen 15 sind derart elastisch nachgiebig ausgeführt, dass die Endkappe 3a für eine Erstmontage axial auf den Aufnahmerand 9a aufgesteckt und in die Führungsaussparungen 16 eingerastet werden kann. Ein erneutes Lösen der Endkappen 3a von dem Kassettengehäuse 2a ist grundsätzlich durch entsprechendes nach innen Drücken der Rastnasen 15 möglich, allerdings aufgrund der baulichen Einschränkungen nur mit erheblichem Aufwand realisierbar. Die Rastnasen 15 sind innenseitig an der Innenwandung der Endkappe 3a angeordnet und sind stirnseitig an stegartigen Rastschenkeln vorgesehen, die parallel zur Innenwandung der Endkappe 3a zu dem Kassettengehäuse 2a hin abragen.

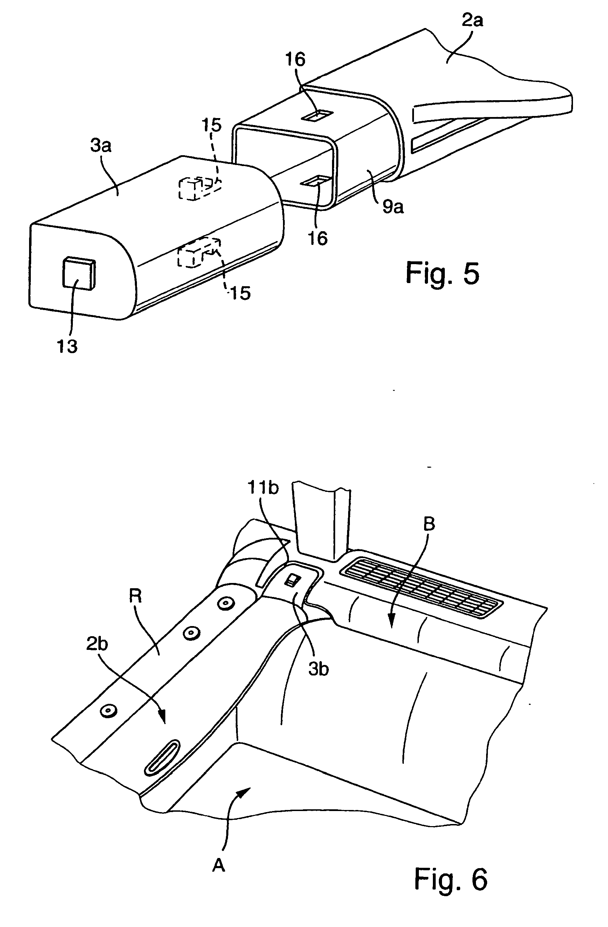

Die Ausführungsform gemäß Fig. 6 entspricht von der grundsätzlichen Anordnung des Kassettengehäuses 2b her den zuvor beschriebenen Ausführungsformen. Auch bei der Ausführungsform nach Fig. 6 ist das Kassettengehäuse 2b rückseitig einer Rückenlehnenanordnung R einer Fondsitzbank vorgesehen und erstreckt sich horizontal in Fahrzeugquerrichtung etwa auf Höhe einer Fahrzeugbordkante. Zudem ist es in gegenüberliegenden, fahrzeugseitigen Seitenbrüstungen B gehalten. Das Kassettengehäuse 2b weist ein flexibles Flächengebilde auf, das als Laderaumabdeckung fungiert und den Laderaum A in ausgezogenem Zustand etwa horizontal überspannt. Auch die Endkappen 3b des Kassettengehäuses 2b schließen in ihrem Füge- oder Anbindungsbereich an die entsprechende Stirnseite des Kassettengehäuses 2b bündig und fluchtend mit der Außenkontur des Kassettengehäuses 2b an dieses an. Wesentlicher Unterschied bei der Ausführungsform nach Fig. 6 ist es, dass dort keine Axialbeweglichkeit der Endkappe 3b vorgesehen ist, sondern dass vielmehr beide Endkappen 3b axial fixiert an dem Kassettengehäuse 2b befestigt sind. Beide Endkappen 3b weisen Verriegelungsmittel auf, um eine Sicherung oder Freigabe der Endkappen 3b in den fahrzeugseitigen Halteaufnahmen 11 b der jeweiligen Brüstung B zu ermöglichen. Wie anhand der Fig. 6 erkennbar ist, sind die Verriegelungsmittel mit nicht näher bezeichneten Betätigungsknöpfen versehen, mittels derer eine Entriegelung der Verriegelungsmittel ermöglicht ist.

## Patentansprüche

1. Laderaumschutzvorrichtung mit wenigstens einer Wickelwelle, die zwischen zwei Endkappen drehbeweglich gelagert ist, wobei die Endkappen Fixiermittel zum Befestigen der Einheit aus Wickelwelle und Endkappen in fahrzeugseitigen Halteaufnahmen aufweisen, und wobei die Wickelwelle in einem Bereich zwischen den Endkappen von einem Gehäuse umgeben ist, das wenigstens einen Austrittsschlitz für ein auf der Wickelwelle auf- und abwickelbar gehaltenes flexibles Flächengebilde umfasst, wobei die Endkappen (3a, 3b) in ihrem an das Gehäuse (2a, 2b) anschließenden Stirnrandbereich derart gestaltet sind, dass ihre Außenkontur fluchtend in die Außenkontur des Gehäuses (2a, 2b) übergeht, und wobei Steckmittel (9a, 10a) an den Stirnrandbereichen der Endkappen (3a, 3b) und/oder an korrespondierenden Stirnseiten des Gehäuses (2a, 2b) vorgesehen sind, die ein zentriertes Anfügen der Endkappen (3a, 3b) an das Gehäuse ermöglichen, **dadurch gekennzeichnet, dass** wenigstens eine Endkappe (3a) durch Führungsflächen (9a) relativ zu einer Gehäuselängsachse axial beweglich geführt ist, und dass wenigstens ein Endanschlag (15, 16) vorgesehen ist, der die Axialbeweglichkeit der Endkappe (3a) relativ zu dem Gehäuse (2a) begrenzt.

2. Laderaumschutzvorrichtung nach Anspruch 1, **dadurch gekennzeichnet, dass** die Steckmittel Aufnahmeränder (9a) am Gehäuse (2a) umfassen, die nach innen abgesetzt sind, und dass jede Endkappe (3a) korrespondierende Steckflächen (10a) aufweist, die außen auf den jeweiligen Aufnahmerand (9a) aufsteckbar sind.

3. Laderaumschutzvorrichtung nach Anspruch 1, **dadurch gekennzeichnet, dass** die Aufnahmeränder eine gehäuseinnenseitige Abstufung aufweisen, und dass jede Endkappe in die Abstufung axial eingesteckt ist.

4. Laderaumschutzvorrichtung nach Anspruch 1, **dadurch gekennzeichnet, dass** den Steckmitteln Sicherungsmittel zugeordnet sind, die jede Endkappe (3a, 3b) in ihrem an das Gehäuse (2a, 2b) angefügten Montagezustand axial sichern.

5. Laderaumschutzvorrichtung nach einem der vorhergehenden Ansprüche, **dadurch gekennzeichnet, dass** das Gehäuse ein- oder mehrteilig aus Kunststoff hergestellt ist.

6. Laderaumschutzvorrichtung nach Anspruch 5, **dadurch gekennzeichnet, dass** das Gehäuse (2a, 2b) in seiner Außenkontur durch Freiformflächen gebildet ist.

## Claims

1. Luggage compartment protection device having at least one winding shaft mounted in rotatably movable manner between two end caps, where said end caps have fixing means for fastening the unit made up of winding shaft and end caps in on-vehicle holding receptacles and where the winding shaft is enclosed in an area between the end caps by a housing comprising at least one exit slot for a flexible planar structure held in a windable and unwindable manner on the winding shaft, where the end caps (3a, 3b) in their edge area adjoining the housing (2a, 2b) are designed such that their outer contour merges flush into the outer contour of the housing (2a, 2b) and where insertion means (9a, 10a) are provided at the edge areas of the end caps (3a, 3b) and/or at corresponding end faces of the housing (2a, 2b) which permit a centered connection of the end caps (3a, 3b) to the housing, **characterized in that** at least one end cap (3a) is guided in axially movable manner relative to a housing longitudinal axis by guide surfaces (9a), and **in that** at least one end stop (15, 16) is provided that limits the axial movability of the end cap (3a) relative to the housing (2a).

2. Luggage compartment protection device according to Claim 1, **characterized in that** the insertion means comprise receiving edges (9a) on the housing (2a) which are stepped inwards, and **in that** each end cap (3a) has corresponding insertion surfaces (10a) fittable onto the outside of the respective receiving edge (9a).

3. Luggage compartment protection device according to Claim 1, **characterized in that** the receiving edges have a step on the inside of the housing and **in that** each end cap is axially inserted into the step.

4. Luggage compartment protection device according to Claim 1, **characterized in that** the insertion means are assigned securing means which axially secure each end cap (3a, 3b) in its assembled state connected to the housing (2a, 2b).

5. Luggage compartment protection device according to one of the preceding claims, **characterized in that** the housing is made of plastic in one or more parts.

6. Luggage compartment protection device according to Claim 5, **characterized in that** the housing (2a, 2b) is shaped in its outer contour with free-form surfaces.

## Revendications

1. Dispositif de protection de compartiment à bagages comprenant au moins un arbre d'enroulement qui est logé en rotation entre deux embouts, sachant que les embouts présentent des moyens de fixation destinés à fixer dans des logements de maintien du véhicule l'unité constituée de l'arbre d'enroulement et des embouts, et que dans une zone entre les embouts, l'arbre d'enroulement est entouré par un boîtier qui comprend au moins une fente de sortie pour une structure plane souple maintenue sur l'arbre d'enroulement de manière enroulable et déroulable, que dans leur zone marginale frontale se raccordant au boîtier (2a, 2b), les embouts (3a, 3b) sont conçus de manière telle que leur contour extérieur s'aligne sur le contour extérieur du boîtier (2a, 2b), et que sur les zones marginales frontales des embouts (3a, 3b) et/ou sur les faces frontales correspondantes du boîtier (2a, 2b) sont prévus des moyens d'emboîtement (9a, 10a) qui permettent un raccordement centré des embouts (3a, 3b) au boîtier, **caractérisé en ce qu'**au moins un embout (3a) est guidé de manière mobile relativement à un axe longitudinal du boîtier par des surfaces de guidage (9a), et qu'est prévue au moins une butée de fin de course (15, 16) qui limite la mobilité axiale de l'embout (3a) par rapport au boîtier (2a).

2. Dispositif de protection de compartiment à bagages selon la revendication 1, **caractérisé en ce que** les moyens d'emboîtement comprennent des bords d'emboîtement (9a) sur le boîtier (2a), qui sont étagés vers l'intérieur, et que chaque embout (3a) présente des surfaces d'emboîtement (10a) correspondantes emboîtables sur l'extérieur des bords d'emboîtement (9a) respectifs.

3. Dispositif de protection de compartiment à bagages selon la revendication 1, **caractérisé en ce que** les bords d'emboîtement présentent un gradin du côté intérieur du boîtier, et que chaque embout est emboîté axialement dans le gradin.

4. Dispositif de protection de compartiment à bagages selon la revendication 1, **caractérisé en ce qu'**aux moyens d'emboîtement sont associés des moyens d'arrêt qui bloquent axialement chaque embout (3a, 3b) dans son état de montage raccordé au boîtier (2a, 2b).

5. Dispositif de protection de compartiment à bagages selon l'une des revendications précédentes, **caractérisé en ce que** le boîtier est fabriqué en une seule pièce ou plusieurs pièces dans une matière synthétique.

6. Dispositif de protection de compartiment à bagages selon la revendication 5, **caractérisé en ce que** dans son contour extérieur, le boîtier (2a, 2b) est constitué de surfaces formables à volonté.
